**Europäisches Patentamt**

**European Patent Office**

**Office européen des brevets**

(19)

(11) Publication number: **0 123 641**
**A2**

(12) # EUROPEAN PATENT APPLICATION

(21) Application number: **84630064.8**

(22) Date of filing: **19.04.84**

(51) Int. Cl.³: **H 03 K 13/00**
**H 03 K 17/00, F 16 P 3/08**
**F 16 P 3/12**

(30) Priority: **21.04.83 US 487407**

(43) Date of publication of application:
**31.10.84 Bulletin 84/44**

(84) Designated Contracting States:
**DE FR GB IT**

(71) Applicant: **COSDEN TECHNOLOGY, INC.**
**100 West 10th Street**
**Wilmington Delaware(US)**

(72) Inventor: **MacLaughlin, Donald N.**
**5705 Lamplighter Drive**
**Midland Michigan 48620(US)**

(74) Representative: **Waxweiler, Jean et al,**
**OFFICE DENNEMEYER S.à.r.l. 21-25 Allée Scheffer**
**P.O.Box 41**
**L-2010 Luxembourg(LU)**

(54) **Improved safety shield control system.**

(57) Disclosed is an encoder/decoder interrogation system useful for determining the condition of safety shields or the like which are intended to protect users of equipment having potentially hazardous work stations. The interrogation system may comprise a plurality of encoders positioned on a stationary portion of the equipment. Each of the encoders has an associated decoder positioned on a safety shield or closure member. When the decoder on the safety shield is properly juxtaposed with its associated encoder in a predetermined orientation, it becomes operable to close a circuit path through the encoder. A scanner is provided for selectively and sequentially transmitting an interrogation signal to each of the encoders and in turn receiving signals from each of the encoders in response to the interrogation signal. A timer is operatively connected to the scanner for timing the period between the sending of a scanner interrogation signal and the receipt of an encoder response signal. If no response signal is received by the scanner before the elapse of a predetermined period of time, the timer will emit a fault signal which is operable to shut down the equipment.

./...

FIG. 1

IMPROVED SAFETY SHIELD CONTROL SYSTEM.

## Field of the Invention

The present invention relates to automatic personnel protection devices and more particularly to electronic lockout devices to prevent user interference with safety devices intended to limit access to hazardous areas of industrial equipment.

## Background and Prior Art

Many industrial and consumer machines perform operations such as stamping, cutting, spinning, milling, welding, etc. which present potential dangers to careless or unwary users. An example of such a machine is a spinwelder for container sections such as that disclosed in U.S. Patent No. 3,800,400 to Mistarz et al wherein a plurality of gears, rotating wheels, spinning shafts, etc. are utilized. If an article of loose clothing is caught in such a device or if the operator of the machine has direct access to blades, drills, punches or the like while in operation, a hazard is created which can result in serious injury. It is therefore common on such equipment to utilize a protective shield or other lockout device to prevent direct access to the dangerous areas of the operating equipment. Such a shield can be in the form of a hinged door with an electrical interlock, which when closed effectively blocks operating personnel from deliberately or accidentally interfering with operating equipment. Such interlocks are commonly in the form of a lockout switch which controls power to the equipment. In the event the shield or closure member is not securely closed, the switch will prevent the equipment from operating. Known switches for this purpose can be either contact operated (for example, microswitches) or magnetically operated (for example, read switches) and can be normally opened or normally closed switches depending upon the configuration of the associated circuitry for operating the equipment. Also known in this art are radio frequency (RF) guards which utilize an RF loop and an antenna. If anything which will alter the circuit capacitance (such as an operator's hand) is positioned between the loop and the antenna, its presence will be sensed by the antenna which will automatically interrupt operation of the equipment.

In connection with such safety shields and electrical interlocks, problems can arise when the operator of the equipment, or other maintenance personnel, deliberately attempt to defeat the electrical interlock. For example, should the electrical interlock switch malfunction or become misaligned with the closure member, maintenance personnel may attempt to superficially remedy the problem so that the machine can be quickly brought back on line by positioning a magnet near the switch member (if it is a magnetically actuated switch) or by simply jumping or shorting the switch if it is a mechanical switch. Radio frequency switches can be similarly defeated.

Similar measures can be undertaken by equipment users or maintenance personnel, if for any other reason it is decided to operate the equipment without the built-in safety system. Thus, a major problem with prior art safety systems is the ease with which they can be defeated by operator or maintenance personnel.

## SUMMARY OF THE INVENTION

It is therefore an object of the present invention to provide an improved equipment safety system which cannot be readily defeated by user personnel.

It is a further object of the present invention to provide a safety switch lockout which can only be opened by authorized personnel.

It is a still further object of the present invention to provide a circuit for preventing the use of any equipment on which the safety shield is malfunctioning or opened or on any equipment where the safety shield has been subjected to tampering.

To achieve the foregoing and other objects of the present invention an encoder interrogation system is provided which comprises a plurality of encoders. Each of these encoders has an associated decoder which when juxtaposed with the encoder in a predetermined orientation, is operable to close a circuit path through said encoder. A scanner is provided for selectively and sequentially transmitting interrogation signals to each of the plurality of encoders and for receiving response signals from said plurality of encoders in order to enable the scanner to proceed to transmit the next interrogation signal. A timer is also provided which is operatively connected to the scanner for timing the period between each of the interrogation signals and the encoder response signals. In the event that an encoder response signal is not received within a predetermined period of time, the timer is operable for emitting a fault signal which will shut down the associated equipment or machinery.

Preferably, each of the encoders comprises a switching network comprising at least one normally opened and one normally closed switch and each decoder associated with an encoder comprises an actuator which is operable to close the normally opened switch(es) without disturbing the normally closed switch(es). Preferably, the encoder also comprises a time delay circuit for generating an encoder response signal which is delayed in time from the associated encoder interrogation signal.

It is also preferred that the timer comprises a resistor/capacitor charging network and a voltage level detection circuit which is operable to generate a triggering signal whenever the charge on the capacitor exceeds a predetermined level. Preferably, the triggering signal energizes an activating means which is latched in the energized position. The activating means is operable to generate a fault signal and also to provide the operator of the equipment with an indication that a fault or trip signal has been generated.

Preferably, the timer, the encoders, and the scanner of the present invention are all electrically interlocked to prevent tampering with the system. It is also preferred that the encoders as well as the other circuit elements be encapsulated so as to prevent user tampering with the system.

It is also preferred that all of the system components be energized by a single low voltage power supply.

Preferably, the scanner of the present invention comprises a counter for sequentially and continuously directing interrogation signals to the plurality of encoders and indication means are provided to identify which of the plurality of encoders is being scanned at any instant.

## BRIEF DESCRIPTION OF THE DRAWINGS

The accompanying drawings, which are incorporated in and form a part of the specification, illustrate a preferred embodiment of the present invention and together with the description, serve to explain the principles of the invention. In the drawings:

Figure 1 is a schematic of a station scanner in accordance with the invention;

Figure 2 is a schematic of a timer circuit for timing the response form each station scanned;

Figure 3 is an encoder for determining whether the closure or shield member being scanned is secured;

Figure 3A is a plan, sectional view of a decoder for the encoder of Figure 3;

Figure 4 is a time chart which is useful for understanding the sequence of operation of the circuits of Figures 1-3.

## DETAILED DESCRIPTION OF THE INVENTION

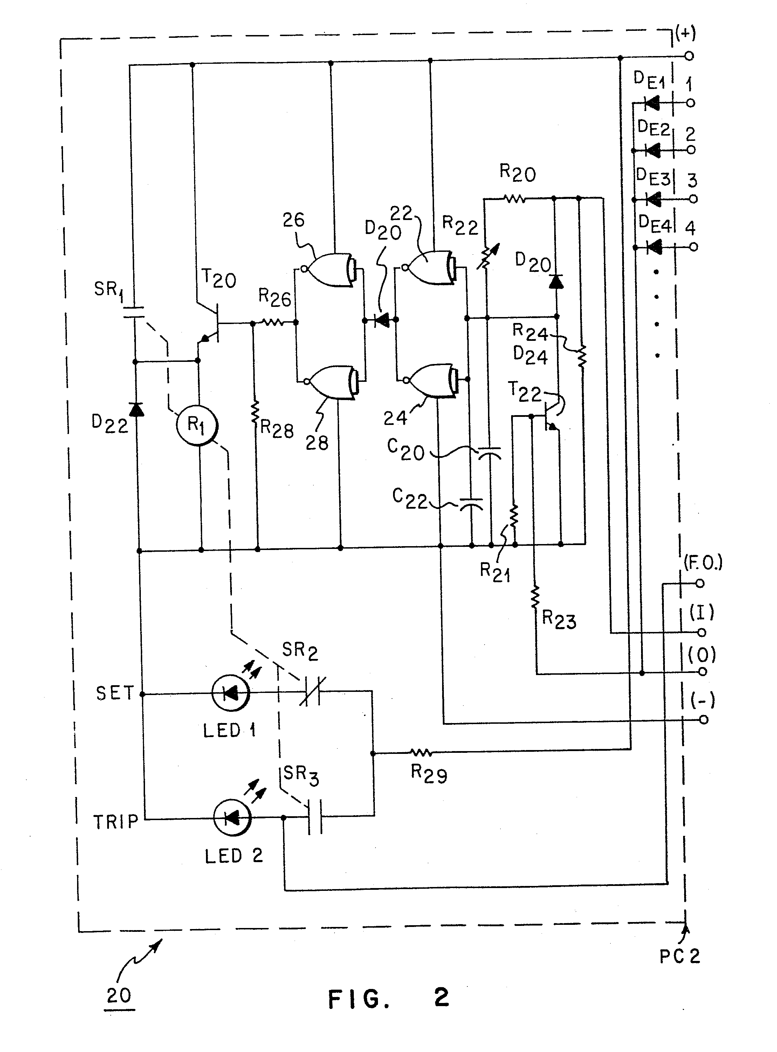

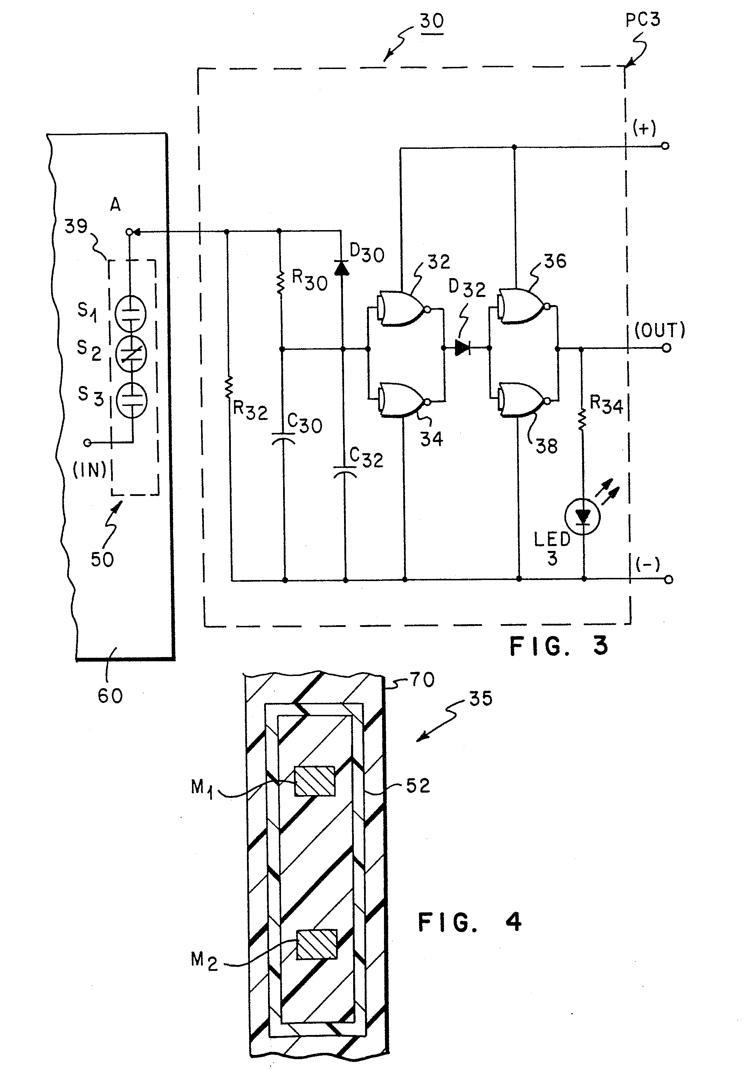

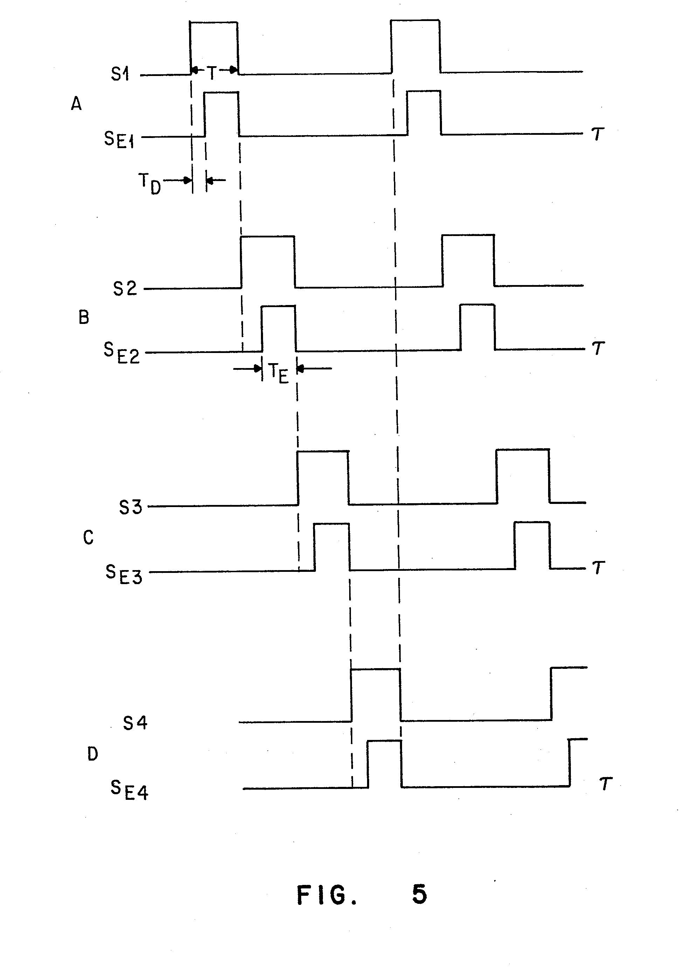

Reference will now be made in detail to the present preferred embodiment of the invention, an example of which is illustrated in the accompanying drawings. The present system is particularly useful for monitoring the status of a large number of shields or closures associated with a piece of equipment. As further described hereinbelow, each closure or shield is provided with a means for determining whether the shield is securely closed or whether it has been tampered with. Preferably, such means includes an encoder/decoder (E/D) switching arrangement similar to that disclosed in copending Serial No. _____ filed _____ (currently Attorney Docket No. DC-459), which disclosure is hereby incorporated herein and briefly described below. Means are provided to interrogate each of the E/D units in sequence. Preferably, such means may include a digital scanner. Each time the scanner interrogates an E/D unit, a means is provided for timing the return of a proper answer and for closing down the machine if the return answer is late or not proper. The timer means preferably includes a timer circuit such as that depicted in Figure 2. Each time an inquiry is sent from the scanner to a shield encoder, a means is provided for answering, within a predetermined time interval, whether the shield is properly secured. Preferably, such means includes an E/D unit such as that illustrated in Figure 3.

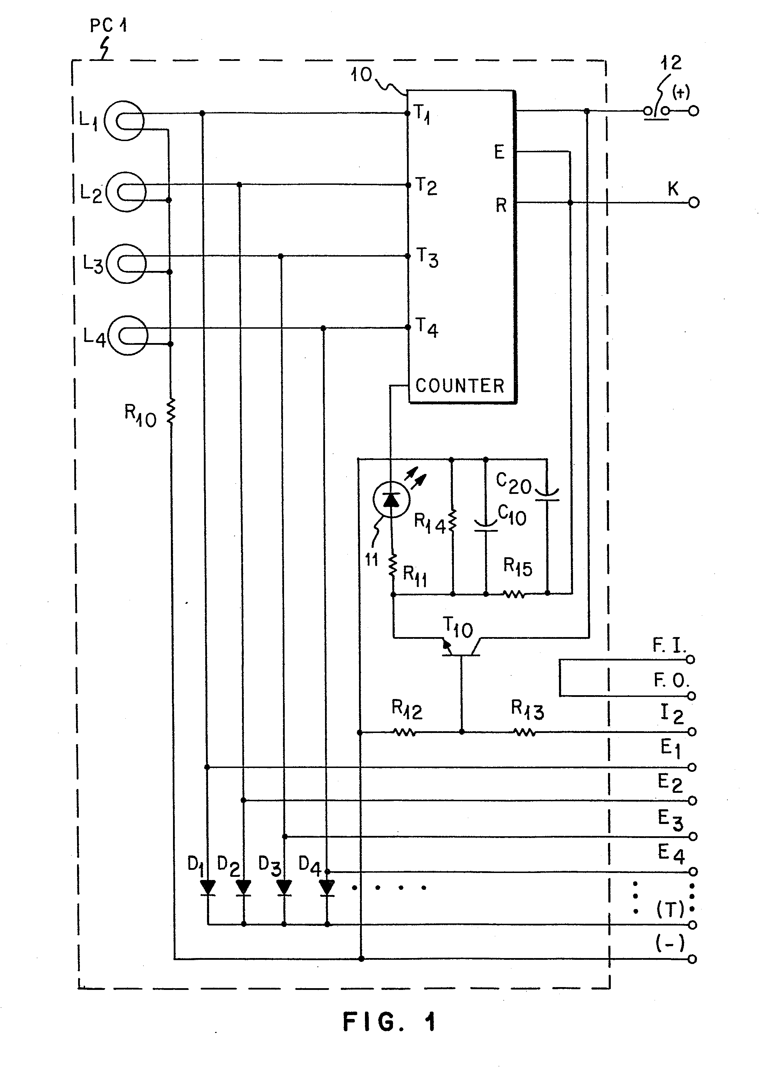

Turning first to Figure 1, there is depicted a station scanner in accordance with the invention. Means 10 are provided to sequentially transmit a signal of a fixed time duration T through terminals $T_1$ through $T_4$ sequentially and repeatedly while the system is in operation. Such means may preferably be in the form of a digital scanner such as a decode counter, a rotary switch or the like. Four terminals are indicated by way of illustration only and it should be appreciated that the number of terminals need only correspond to the number of encoders that are being interrogated and will generally be considerably more than four. In the example, each terminal $T_1$ through $T_4$ is connected to the input of the timer circuit 20 (Figure 2) through steering diodes $D_1$ through $D_4$ respectively and terminal T. This functions to reset the timer circuit 20 each time the scanner interrogates a shield. The scanning signals from terminals $T_1$ through $T_4$ are also inputted to the corresponding encoder 30 (Figure 3) via terminals $E_1$ through $E_4$, respectively. Means may also be provided so that an operator positioned at a main control station will receive an indication of which shield is being scanned and, in the event of a trip, which shield was not securely closed or had been reconfigured. Preferably, LED's or low power lamps ($L_1$-$L_4$) positioned on a master control panel may be provided for this purpose. The lamps $L_1$ through $L_4$ are connected to the terminals $T_1$ through $T_4$, respectively, and then to the low potential of the power supply through current limiting resistor $R_{10}$. The scanner as well as the entire control system is preferably energized by a low voltage source, for example 12v D.C. through a stop/start/reset control 12.

Turning now to Figure 2, there is illustrated an internal timer control in accordance with the invention. The timer is turned on by a signal from terminal T of the scanner which is connected to input terminal I of the timer. As alluded to above, the same low voltage power supply used for the scanner may preferably be connected across the positive (+) and negative (-) terminals of the timer 20.

The timer 20 is provided with a predetermined timeout period by means of a timing circuit. Such means may preferably include an RC network such as $R_{20}$, $R_{22}$ and $C_{20}$. Resistor $R_{22}$ is variable to allow the timeout period to be appropriately selected to provide an adequate time window for a response from the scanned encoders 30 (Figure 3) in accordance with the operation of the overall system. Preferaby the response time will be in the range of from about 50 Nsec to 1 sec. The minimum time is determined by the value of fixed resistor $R_{20}$ which is preferably of much lower resistance than the maximum value of variable resistor $R_{22}$. Whenever the charging circuit does not "timeout", i.e. the capacitor $C_{20}$ fails to charge to a predetermined voltage thereby triggering $T_{20}$ ON, the capacitor $C_{20}$ will discharge through $D_{20}$ and $R_{24}$ to the low side of the power supply. Thus, the capacitor $C_{20}$ will start to recharge from zero as the next encoder is scanned.

Means are provided to sense the level of the charge on capacitor $C_{20}$. Preferably, such means may comprise a quad NOR gate chip having double NOR gate pairs 22, 24 and 26, 28. Each pair of parallel connected NOR gates are connected in series and separated by steering diode $D_{20}$. Whenever the charge on the $C_{20}$ increases above a predetermined level, it serves to input a logical "1" signal to the quad NOR gates which results in a high or "1" output signal. Capacitor $C_{22}$ is connected between the input of the NOR gate network and the low voltage terminal to act as a flutter or ripple filter. As will be understood by one of skill in the art, the NOR gate network can be replaced by an AND gate or by any appropriate voltage level detector which will function to sense the charge level on capacitor $C_{20}$ and output a trigger signal whenever it rises above a predetermined level.

Means are provided at the output of the gate network to suppress the gate output voltage and to provide the proper bias for transistor $T_{20}$. This means may preferably comprise resistor network $R_{26}$ and $R_{28}$. As alluded to above, whenever the charge on capacitor $C_{20}$ exceeds a predetermined voltage, the voltage level detection means provides a trigger signal to the resistor network $R_{26}$ $R_{28}$, and the normally OFF transistor $T_{20}$ turns ON. The transistor $T_{20}$ provides the means to energize relay R1 in the event that the timer "times out", i.e. the charge on the capacitor $C_{20}$ exceeds the predetermined amount.

Once the relay Rl is energized, means are provided to latch it on. Such means may include normally open switch $SR_1$ which is closed by relay Rl and which then maintains relay Rl in the energized state. Switch $SR_{1-1}$, when closed by relay Rl, connects relay Rl directly to the high (+) side of the power supply. Means may also be provided to suppress the generation of a counter emf from the relay Rl. Such means may comprise diode $D_{22}$.

As long as the timer fails to time out, the system will remain in the set or operating position. This means that each time the scanner 10 interrogates an encoder 30, the proper response is timely received and the scanner is free to go on to interrogate the next sequential encoder. Under these circumstances, "SET" indication means is provided to inform the operator that everything is proceeding normally. The "SET" indication means may comprise a LED1 or other indicator which is connected to the high (+) side of the power supply through a normally closed switch $SR_2$ and current limiting resistor $R_{29}$.

Whenever the timer times out and the relay Rl is tripped, normally closed switch $SR_2$ is opened thus extinguishing the "SET" indication. In addition, means are provided to indicate the timer has tripped and send a fault signal to the sequencer. Such indicator means may comprise LED2 and normally open switch $SR_3$. When the transistor $T_{20}$ turns ON and energizes relay Rl, switch $SR_3$ closes thus energizing

LED2 through current limiting resistor $R_{29}$. At the same time a fault signal outputted from the Fault Out terminal to a device which controls the operation of the associated equipment thereby shutting the equipment.

In the case of a spinwelding machine such as that referenced above, the fault signal will be fed to a rotation control device which controls the moving parts of the spinwelding equipment. Thus, until the problem which caused the trip is diagnosed and remedied, the equipment cannot be operated. By ascertaining which encoder 30 was being interrogated by the scanner 10 at the time the trip occurred, the operator will know which station requires attention. The station being interrogated can be ascertained by determining which indicator ($L_1$-$L_4$, Figure 1) was on at the time the trip occurred.

In order to prevent the user from tampering with or defeating the safety system by removing circuit cards containing the scanner 10, timer 20, or encoder 30, various interlocks are preferably built into the system. For instance, instead of feeding the fault signal from the timer directly to the ultimate control device or circuit, it can be channeled through the scanner card. Preferably directly connected input and output terminals (see Figure 1, FAULT IN/FAULT OUT terminals) may be provided on the scanner card for this purpose. This provides an electrical interlock between the scanner, the timer and whatever control circuit is being utilized.

Similarly, an electrical interlock may be provided between the encoders 30 and the timer 20. Such an interlock may be in the form of encoder return loops indicated in Figure 2 by terminal 1 through 4, one for each of four stations in the present example, which are connected to the output terminal (O) through steering diodes $D_{E1}$ to $D_{E4}$, respectively. Thus, the encoder cards become "dependent" upon the timer card in order to supply a return answer to the scanner and any attempt to remove or alter the timer card will result in shutting down the system.

Turning now to Figure 3, there is illustrated an encoder 30 in accordance with the invention. It should be understood that each station of the system is preferably provided with a separate encoder. An interrogation signal, for example $S_1$ in Figure 4, is received at the input terminal (IN) from the scanner 10 (Figure 1) via the appropriate scanner terminal, in this case $E_1$. The scanner signal must then pass through an encoded, encapsulated switching network 50 which is provided on the device (not shown) being protected at a location where a safety shield or closure member (not shown) contacts the device. The switching network may preferably comprise an arrangement of normally open, glass encapsulated, magnetically actuated reed switches which are embedded in an opaque potting material 39 so that the switch pattern is not visible to the user. In order to prevent any attempt to defeat the safety system by placing a large bar magnet over the switching network, there may be provided a normally closed switch which will open if placed in proximity with a magnet--thereby preventing the passage of the scanner interrogation signal (e.g. $S_1$) to the terminal A.  A decoding means is positioned on the safety shield or closure member. When the shield closure is securely fastened to the equipment, the decoder means is operable to provide a signal path between the input terminal (in) and terminal A.  As shown in Figure 3A, the decoder 35 may preferably comprise an arrangement of bar magnets $M_1$ and $M_2$ encapsulated in an opaque potting material 52 so that the arrangement of the magnets will not be visible to the user of the device on which the shield is positioned.  The magnets $M_1$ and $M_2$ are positioned so as to actuate the normally open switches $S_1$ and $S_3$ on the encoder but not to disturb the normally closed switch $S_2$.  Of course, many other encoder/decoder switching arrangements are possible within the scope of the invention.  It is also contemplated that the switches may be microswitches, radio frequency (rf) switches or the like.

In order to afford the scanner 10 an adequate amount of time in which to seat itself, a time delay, $T_D$ (Figure 4) is introduced into the encoder response.  The delay period must be long enough to allow the scanner an appropriate interval to seat itself after each inquiry but not so long as to enable the timer 20 to trip and thereby activate the fault signal resulting in a system shutdown.  For the purpose of providing an appropriate delay time a timer similar to the timer 20 may be used or, as will be understood by the artisan, any appropriate delayed trigger pulse generator can be used.

In the present example, a charging circuit $R_{30}$ $C_{30}$ is used to introduce the time delay TD into the encoder output. After the interrogation signal (e.g. $S_1$) is received at terminal A, capacitor $C_{30}$ starts to charge. When the charge on $C_{30}$ reaches a predetermined level, it functions as a logical "1" or high signal for the quad NOR gate (32, 34, 36, 38, $D_{32}$) which in turn passes a logical "1" or high signal to the output terminal (out). As soon as the interrogation pulse drops to zero, the capacitor $C_{30}$ will discharge through discharge circuit $D_{30}$-$R_{32}$. Means —are provided to provide filter out voltage ripple from the quad gate and thereby stabilize the gate. Such means may simply comprise a bypass capacitor $C_{32}$. It will be apparent to the artisan that the quad NOR gate can be replaced by any appropriate voltage level detection circuit such as a simple AND gate. In those applications where switching speed and current consumption are not crucial, the quad NOR gate can be replaced by a fast switching transistor or an SCR. Likewise each parallel pair of NOR gates i.e. 32, 34 and 36, 38 can be replaced by a single NOR gate within the spirit and scope of the invention. The output of the encoder drops to zero simultaneously as scanner switches to interrogate the next encoders best seen in Figure 4, signal $SE_1$. The output signal $SE_1$ from the encoder output terminal (out) returns to the scanner through input terminal (I). As long as an encoder return signal, such as $SE_1$, is received by the scanner before a fault signal is emitted from the timer 20, the scanner 10 will proceed to interrogate the next encoder. However, whenever the timer 20 times out before the encoder answers the interrogation signal $S_1$ from the scanner 10, the system will be disabled by the fault signal from the timer 20.

Preferably the circuits of Figures 1-3 each comprise a separate printed card $PC_1$, $PC_2$, $PC_3$, respectively, and each is at least partially encapsulated in an opaque epoxy to prevent user diagnosis.

A typical cycle of operation will now be described with reference to the timing chart shown in Figure 4. It is assumed that only four stations or shield locations are involved in the example and that the scanner 10 is observed just prior to scanning station No. 1 (i.e. while scanning station No. 4). As the scanner switches to $T_1$ a signal $S_1$ is outputted. This signal simultaneously triggers the timing circuit 20 through steering diode $D_1$ and terminal T and is inputted to the encoder 30 associated with station 1 (not shown) through terminal $E_1$. An indicator $L_1$ on the scanner is also actuated so that the operator is advised as to which station is being scanned. Assuming the shield of station 1 is properly secured, the encoder will answer the interrogation signal $S_1$ after a time delay of $T_D$ thus enabling the scanner 10, after the expiration of the period T, to proceed to interrogate the next station by outputting the signal $S_2$ from the terminal $T_2$.

If, at the time station 1 was interrogated, its shield was not appropriately secured or if for any reason the encoder or decoder had been tampered with or a circuit card removed, either the timer 20 would time out and generate a system disabling fault signal or if the timer were tampered with or removed, the electrical interlock described hereinabove would prevent the scanner 10 from receiving an encoder return signal and progressing on to interrogate the next station.

As should be understood from the above, the system described herein can also be used as an alarm to safeguard a room or enclosure by ensuring that all closures, windows, access parts, etc. are properly secured.

The foregoing description of a preferred embodiment of the invention has been presented for purposes of illustration and description. It is not intended to be exhaustive or to limit the invention to the precise form disclosed, and obviously many modifications and variations are possible in light of the above teaching. The embodiment was chosen and described in order to best explain the princples of the invention and its practical application to thereby enable others skilled in the art to best utilize the invention in various embodiments and with various modifications as are suited to the particular use contemplated. It is intended that the scope of the invention be defined by the claims appended hereto.

WHAT IS CLAIMED:

1. An encoder interrogation system comprising:

a plurality of encoders, each of said encoders having an associated decoder, which, when juxtaposed with said encoder in a predetermined orientation, is operable to close a circuit path through said encoder;

a scanner for selectively and sequentially transmitting an interrogation signal to each of said plurality of encoders and for receiving response signals from said plurality of encoders;

a timer, operatively connected to said scanner for timing the period between each of said scanner interrogation and encoder response signals and for emitting a fault signal when said encoder response signal is not received within a predetermined time period.

2. The system of Claim 1, wherein each of said encoders comprises a switching network comprising at least one normally open and one normally closed switch and said decoder comprises an actuator operable to close said normally open switch without opening said normally closed switch.

3. The system of Claim 2, wherein said switching network comprises at least two switches arranged in a predetermined pattern and said network is encapsulated whereby said switching network is not visible.

4.    The system of Claim 3, wherein said switches are reed switches and said decoder comprises magnets arranged to correspond to said at least one normally opened switches, said decoder being encapsulated in an opaque potting material whereby said magnets are not visible to the user.

5.    The system of Claim 1, wherein said encoder further comprises a time delay circuit for delaying said encoder response signal from said encoder interrogation signal.

6.    The system of Claim 5, wherein said time delay circuit comprises a resistor-capacitor charging network and a voltage level detection circuit operable to generate a fault output whenever the charge on said capacitance exceeds a predetermined level.

7.    The system of Claim 5 further comprising a discharge circuit for discharging said capacitor at the end of each of said encoder interrogation signals.

8.    The system of Claim 1, wherein said timer comprises a resistor-capacitor charging network and a voltage level detection circuit operable to generate a triggering signal whenever the charge on said capacitor exceeds a predetermined level.

9.    The system of Claim 8, wherein said triggering means is connected to a switch activating device and said timing circuit further comprising a latch for said switch activating device which is actuated by the activating device.

10. The system of Claim 9, wherein the switch activating device is a relay and the latch is a normally open switch operable to close in response to said realy.

11. The system of Claim 9 further comprising a fault indication generation circuit operable in response to said activating device to generate a fault signal.

12. The system of Claim 11, wherein said timer further comprises a first indication device operable to provide an indication while said timer has not generated said triggering signal and a second indication device operable to provide an indication whenever said timer has generated said triggering signal; said activating device being operable to enable said second indication device and disable said first indication device.

13. The system of Claim 1, wherein said timer and said plurality of encoders are electrically interlocked.

14. The system of Claim 1, wherein said timer and said scanner are electrically interlocked.

15. The system of Claim 1, wherein said encoders are encapsulated on circuit cards to prevent any tampering therewith.

16.    The system of Claim 1, wherein at least one of said scanner and said timer are encapsulated on circuit cards to prevent tampering therewith.

17.    The system of Claim 1, wherein each of said plurality of encoders, said scanner and said timer are all energized by a single low voltage power supply.

18.    The system of Claim 1, wherein said scanner further comprises a counter for sequentially and continuously directing said interrogation signals to said plurality of encoders.

19.    The system of Claim 1, wherein said scanner further comprises a third indication comprising a plurality of indicators for identifying which of said plurality of encoders is being scanned and further comprises means for resetting said timer each time an interrogation signal is generated.

F I G. 1

0123641

2/4

FIG. 2

0123641

FIG. 3

FIG. 4

4/4

0123641

FIG. 5